# EUROPEAN PATENT APPLICATION

(11) **EP 0 605 187 A2**
(43) Date of publication of application: **06.07.1994**
(21) Application number: 93310418.4
(22) Date of filing: 22.12.1993
(51) Int. Cl.: H04N 9/83

(54) **Video signal recording/reproducing apparatus**

(30) Priority: 29.12.1992 JP 360463/92
(71) Applicant: SONY CORPORATION, Tokyo 141 (JP)
(72) Inventor: Honda, Takashi, c/o Sony Corporation, Tokyo (JP); Miyake, Yoshitaka, c/o Sony Corporation, Tokyo (JP)
(74) Representative: Ayers, Martyn Lewis Stanley

(57) **Abstract**

There is disclosed a video signal recording/reproducing apparatus adapted to convert a chroma signal included in a color video signal of the PAL system to a signal in a low frequency band to record and reproduce it, which comprises a recording system for implementing line offset sub-sampling to the chroma signal to record it; and a reproducing system for implementing re-sampling processing and interpolating processing to a signal from the recording system at the time of reproduction. The recording system comprises a unit for changing the state where the V-axis of the chroma signal is inverted every line to the state where that V-axis is not inverted, and for converting the chroma signal to color difference signals to provide a sub-sampled signal; a unit for implementing line offset sub-sampling to the color difference signals; and a unit for allowing the sub-sampled signal to be a signal placed in the state where the V-axis is inverted every line, thus to provide a low frequency band chroma signal. Further, the reproducing system comprises a unit for converting low frequency band chroma signal to color difference signals and for changing the state where the V-axis is inverted to the state where that V-axis is not inverted; a unit for implementing re-sampling to the color difference signals to interpolate them to provide an interpolated signal; and a unit for allowing the interpolated signal to be a signal placed in the state where the V-axis is inverted to provide a chroma signal of the PAL system.

## Description

This invention relates to a video signal recording apparatus and a video signal recording/reproducing apparatus used for recording of a video signal onto a recording medium or/and reproduction of a video signal therefrom, and more particularly to a video signal recording apparatus and a video signal recording/reproducing apparatus preferable when applied to a VTR (Video Tape Recorder) adapted for converting a chromatic signal of a color video signal in which a carrier phase of a chromatic signal is inverted every line into a signal (component) in a low frequency band to record the low frequency band signal.

In home VTRs (Video Tape Recorders) so called 8mm VTRs or 1/2 inch VTRs, etc., a chromatic signal (carrier chrominance signal or color signal) component (hereinafter simply referred to as a chroma signal or a chroma depending upon the circumstances) of a color video signal is converted into a signal (component) in a low frequency band to record it onto a magnetic tape together with a frequency-modulated luminance signal component. The center frequency of the low frequency bandwidth chroma signal is about 600 ∼ 750 kHz, and the bandwidth is a relatively narrow band of about ± several hundred Hz.

In such a video signal recording apparatus adapted to convert a chroma signal into a signal (component) in a low frequency band to record the low frequency band chroma signal, since the bandwidth of the low frequency band chroma signal is relatively narrow, the chroma signal component of a reproduced signal is inferior to the luminance signal component in various characteristics. Particularly, in revision of the standard for improvement of the picture quality of actual home VTRs, emphasis was laid upon extension of the frequency band of luminance signal. However, for more improvement of the picture quality, improvement in the characteristic such as extension of the frequency band, etc. is required also for the chroma signal.

Meanwhile, in order to carry out substantial extension of the frequency band of a chroma signal without changing to much degree the recording frequency band on a recording medium such as a tape, etc., it is conceivable to apply sub-sampling or sub-Nyquist sampling to a chroma signal. In such sub-sampling, offset is provided in a time base direction like field offset or frame offset, etc., or offset is provided on the two-dimensional plane like line offset, etc. to carry out sampling.

In the case of carrying out sampling with offset being provided in a time base direction like the field offset or the frame offset, a memory of a large capacity such as a field memory or a frame memory, etc. is required.

Further, at the time of handling a moving picture in the processing of space such as field offset, etc., any aliasing component of sub-sample takes place. For this reason, improvement in the frequency band at the time of handling moving picture is difficult. Therefore, moving picture processing such as motion detection, etc. is required.

In view of this, it is proposed to implement line offset sub-sampling. In this case, in a VTR (Video Tape Recorder) of the so-called NTSC (National Television System Committee) system of the television system, in order to eliminate crosstalk from adjacent tracks followed by recording/reproduction of a low frequency band chroma signal, crosstalk canceling processing is generally implemented by using PI (Phase Invert) system or PS (Phase Shift) system, etc. However, since this processing is carried out by using a comb filter of 1H (horizontal period), the condition of line offset does not hold.

This invention has been made in view of actual circumstances as described above, and its object is to provide a video signal recording apparatus and a video signal recording/reproducing apparatus in which in the case of the so-called PAL (Phase Alternation by line), line offset sub-sampling processing is carried out, thus making it possible to extend the frequency band of a chroma signal with a simple configuration.

In accordance with this invention, there is provided a video signal recording apparatus adapted to convert a chroma signal included in a color video signal of the PAL (Phase Alternation by line) system into a signal (component) in a low frequency band to record the low frequency band chroma signal, characterized in that sub-sampling means for implementing line offset sub-sampling to the chroma signal is provided to convert the chroma signal sub-sampled by the sub-sampling means into a signal (component) in a low frequency band to record it onto a recording medium along with a luminance signal.

Further, in accordance with this invention, there is also provided a video signal recording/reproducing apparatus adapted to convert a chroma signal included in a color video signal of the PAL system into a signal (component) in a low frequency band to record or reproduce it, characterized in that there are provided a recording system for implementing line offset sub-sampling to the chroma signal and a reproducing system for carrying out, at the time of reproduction, re-sampling to implement interpolating processing to the re-sampled signal.

The recording system preferably comprises means for changing the state where the V-axis of a chroma signal included in a color video signal of the PAL system is inverted every line to the state where the V-axis of the chroma signal is not inverted, and converting the chroma signal into color difference signals; means for implementing line offset sub-sampling to the color difference signals; and means for allowing the sub-sampled signal to be a signal placed in the state where the V-axis of the chroma is inverted every line to provide a low frequency band chroma signal. On the other hand, the reproducing system preferably comprises means for converting the low frequency chroma signal to color difference signals and changing the state where the V-axis of the chroma signal is inverted to the state where the V-axis of chroma is not inverted, means for re-sampling the color difference signals to interpolate the re-sampled color difference signals to provide an interpolated signal; and means for allowing the interpolated signal to be a signal placed in the state where the V-axis is inverted every line to provide a chroma signal of. the PAL system.

Further, in the reproducing system, it is preferable to eliminate crosstalk of a chroma signal by using a 2H comb filter, or to carry out interpolating processing in the reproducing system while removing crosstalk by using a line interpolating circuit.

In accordance with the video signal recording apparatus according to this invention, since the chroma signal is subjected to line offset sub-sampling, extension of the frequency band of a chroma signal can be realized with a memory capacity smaller than that in the case of sub-sampling having offset in a time base direction like field offset, etc., and at a low cost. Here, a chroma signal of the PAL system is once converted into a color difference signals, etc. and the state where the V-axis of chroma signal of the PAL systems inverted every line is changed to the state where the chroma signal is not inverted. Thus, line offset sub-sampling is effectively carried out. Since 2H comb filter is used, the problem of crosstalk is eliminated. Further, since line offset sub-sampling is employed, frequency band improvement effect can be provided to the same degree also at the time of handling moving picture as compared to sub-sampling having offset in a time base direction like field offset, etc. As a result, any moving picture processing circuit is unnecessary.

The present invention will be further described hereinafter with reference to the following description of an exemplary embodiment, and the accompanying drawings, in which:

Fig. 1 is a circuit diagram showing, in a block form, the outline of the configuration of a recording system of a video signal recording/reproducing apparatus according to this invention.

Fig. 2 is a circuit diagram showing, in a block form, the outline of the configuration of a reproducing system of the embodiment shown in Fig. 1.

Fig. 3 is a view showing a line offset sub-sampled signal of the field which is not subject to PS (Phase Shift) processing and a crosstalk signal from adjacent tracks.

Fig. 4 is a view showing a line offset sub-sampled signal of the field which is subject to PS (Phase Shift) processing and a crosstalk signal from adjacent tracks.

A preferred embodiment of this invention will now be described with reference to the attached drawings.

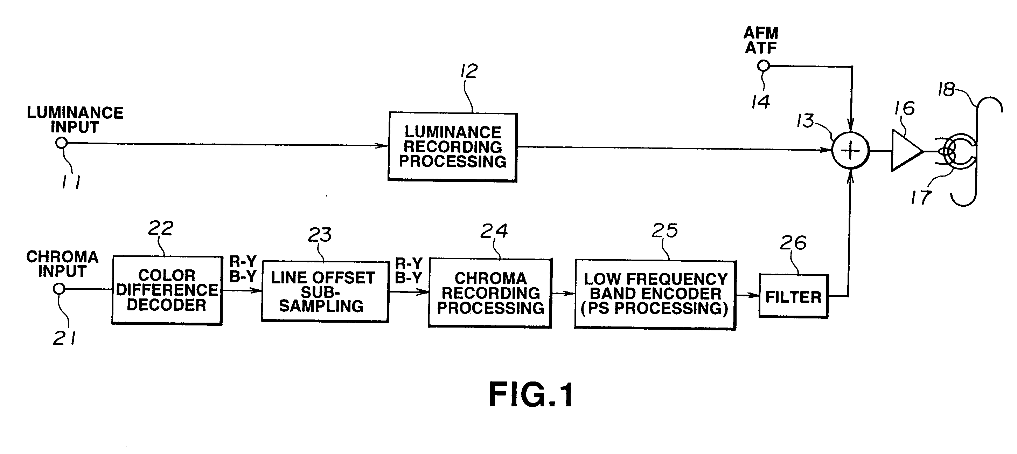

Fig. 1 shows the outline of the recording system of a VTR (Video Tape Recorder), particularly 8 mm VTR of the PAL system which is an embodiment of a video signal recording/reproducing apparatus according to this invention.

In Fig. 1, input terminal 11 is supplied with a luminance (Y) signal of a composite color video signal of the so-called PAL (Phase Alternation by line) system in which the V-axis (R-Y axis) of a chroma signal is inverted every 1H (1 line). This input luminance signal is sent to a luminance recording processing circuit 12, at which various signal processing for recording are implemented thereto. The signal thus processed is sent to an adder 13. This adder 13 is supplied, in addition to a chroma (C) signal subjected to line offset sub-sampling processing which will be described later, an AFM signal (Audio FM signal), an ATF signal (Pilot signal for tracking control), and the like. These signals are added and mixed at the adder 13. An output of the adder 13 is amplified at an amplifier 16. Then, an output of the amplifier 16 is sent to a recording head 17 of a rotary head unit. Thus, this signal is recorded onto a video tape 18 in accordance with a predetermined format.

Input terminal 21 is supplied with chroma (C) signal of the PAL system. This chroma signal is subject to line alternate indicating the state where the V-axis (R-Y axis) is inverted every line. This input chroma signal is sent to a color difference decoder 22. At the decoder 22, the input chroma signal is decoded into color difference information, and line alternate is restored (canceled) to thereby provide normal R-Y, B-Y signals (i.e., signals to which no line alternate is applied).

These normal R-Y, B-Y color difference signals are sent to a line offset sub-sampling circuit 23, at which line offset is implemented thereto to carry out thinning processing of data so that offset of 180 degrees is given every line.

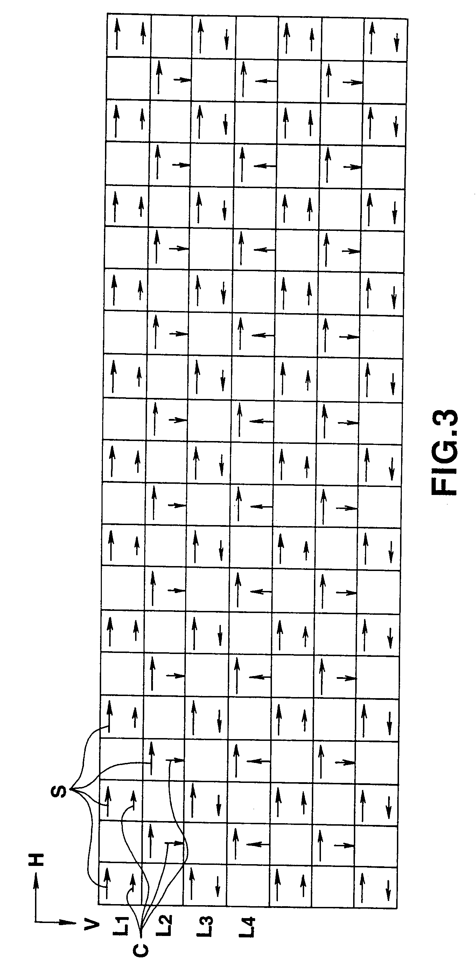

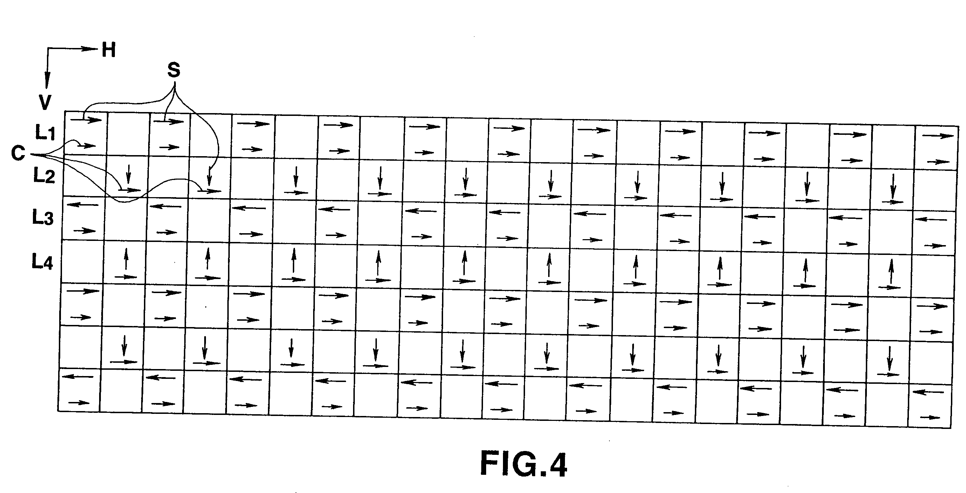

Respective output signals from the line offset sub-sampling circuit 23 are sent to a chroma recording processing circuit 24, at which signal processing for recording such as chroma emphasis, etc. is implemented. The signal thus obtained from the chroma recording processing circuit 24 is sent to an encoder 25 for conversion to low frequency band (hereinafter simply referred to as a low frequency band encoder), at which it is encoded so that a low frequency chromatic signal having a center frequency of 732 KHz is provided. At this time, the line alternate (indicating the state where the V-axis is inverted every line) processing is implemented, and PS (Phase Shift)_ processing for removing crosstalk between adjacent recording tracks is implemented so that PS pattern with offset as indicated by arrows S in Figs. 3 and 4 is provided.

This PS processing will now be briefly described. With respect to signals of adjacent two recording tracks (2 fields) on video tape, at the time of recording of a signal, when the phase (chroma phase) of the low frequency band chroma signal of one track is assumed to be fixed, the chroma phase of the other track is shifted by 90 degrees every 1H line. At the time of reproduction of signal, such phase shifted state is caused to be restored to the original state. By carrying out such PS processing, a frequency interleaving processing such that a frequency difference between low frequency band chroma signals of adjacent tracks becomes equal to f_{H}/4 (f_{H} is horizontal frequency) is implemented. At the time of reproduction, 2H comb filter as described later is used, thereby making it possible to reduce crosstalk between adjacent tracks.

In Fig. 3, with respect to the signal of the track in which the chroma phase is fixed of signals of adjacent two recording tracks, the chroma phase is indicated by arrow S in the figure. The blank portions are portions thinned by the line offset sub-sampling. In Fig. 4, with respect to the signal of the track in which the chroma phase is shifted by 90 degrees of signals of adjacent two recording tracks, the chroma phase is indicated by arrows S in the figure. It is seen from this figure that the chroma phase rotates by 90 degrees every respective lines with four lines L1, L2, L3, L4 being as a period.

When a signal of a fixed chroma phase as shown in Fig. 3 is recorded onto a tape and is reproduced therefrom, the chroma phase of the crosstalk component from adjacent tracks is as indicated by short arrow C. As described later, data of upper and lower lines are used to implement interpolating processing while removing crosstalk, thus to extend the chroma frequency band so that its bandwidth is equal to a value twice greater than the original one.

Turning back to Fig. 1, the low frequency band chroma signal to which the line alternate processing and the PS processing are implemented by the low frequency band encoder 25 undergoes filtering by a filter 26 such as a low-pass filter, etc. The chroma signal thus obtained is sent to adder 13.

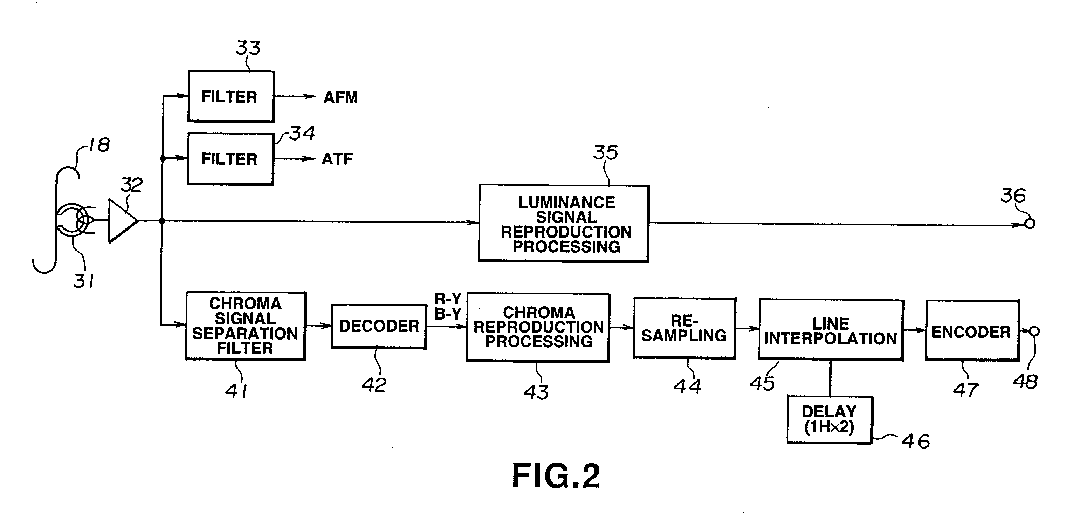

Fig. 2 shows the outline of the configuration of the reproducing system of VTR of the embodiment according to this invention. In Fig. 2, video tape 18 on which a video signal is recorded by the signal recording system as shown in the above-mentioned Fig. 1 is reproduced by a reproducing head 31. The reproduced signal thus obtained is amplified by an amplifier 32. An AFM (Audio FM) signal is taken out by a filter 33, and ATF (Automatic Track Finding signal, i.e., pilot signal for tracking control) is taken out by a filter 34. The signal from the amplifier 32 is sent to a luminance reproduction processing circuit 35, at which various signal processing for reproduction of a luminance signal are implemented. The signal thus processed is sent to output terminal 36.

Further, through a chroma signal separation circuit 41, low frequency band chroma signal having, e.g., a frequency of 732 kH from the amplifier 32 is sent to a decoder 42, at which it is converted to color difference signals, and the restoring processing of the PS (Phase Shift) and the restoring processing of the line alternate are implemented thereto. Thus, normal R-Y, B-Y color difference signals (signals to which no line alternate is applied) are provided. These R-Y, B-Y color difference signals are sent to a chroma reproduction processing circuit 43, at which reproduction signal processing, e.g., APC, ACC, chroma deemphasis, etc. are then implemented. The signal thus processed is sent to a re-sampling circuit 44. At the re-sampling circuit 44, sampling having offset as shown in Fig. 3 or 4 is implemented. The signal thus processed from the re-sampling circuit 44 is sent to a line interpolating circuit 45. At this line interpolating circuit 45, interpolating processing is carried out while eliminating crosstalk by using data of upper and lower lines by a delay circuit 46 of 2H, i.e., in a practical sense, by using 2H comb filter configuration. By this interpolating processing, the chroma frequency band is extended so that its bandwidth is equal to a value twice greater than the original bandwidth. Thereafter, the signal thus obtained is encoded into a chroma signal of the PAL system having a center frequency of 4.43 MHz while implementing the line alternate processing at an encoder 47. The signal thus encoded is taken out from output terminal 48.

As the transfer characteristic from the line offset sub-sampling circuit 23 of Fig. 1 up to the re-sampling circuit 44 of Fig. 2, it is necessary to employ an object cosine roll-off characteristic of delay flat.

In the configuration as described above, line offset sub-sampling, PS processing as indicated by the pattern of arrow S of Figs. 3 and 4 are implemented, so crosstalk as indicated by arrow C takes place. To eliminate this, at the time of reproduction of a signal of a field with no PS of Fig. 3, 2H comb filter is used to carry out interpolation while removing crosstalk by upper and lower lines. On the other hand, at the time of reproduction of a field with PS of Fig. 4, the phase shifted state is restored to the original state to allow thereby that phase shifted signal to be a signal having a pattern such that the crosstalk component shifts for 2H period similarly to the case of Fig. 3, thereafter to carry out interpolation while removing crosstalk by upper and lower lines by using 2H comb filter. As a result, elimination of chroma crosstalk and extension of the chroma frequency band can be realized at the same time. Thus, satisfactory picture quality, particularly color reproducibility can be obtained.

In addition, as compared to the sub-sampling having offset in a time base direction like field offset sub-sampling, the memory capacity of the processing circuit can be reduced to much degree. As a result, extension of the chroma band can be realized at a low cost. Since line offset is employed, similar band improvement effect can be provided also at the time of handling moving picture. Thus, moving picture processing circuit such as a pre-filter in the case of the field offset or adaptive processing circuit corresponding to motion, etc. becomes unnecessary.

It is to be noted that this invention is not limited to the above-described embodiment. While explanation has been given by taking the example of so called 8 mm VTR of the PAL system in the above-described embodiment, it is needless to say that this invention can be applied to, e.g., VTR of the 1/2 type or VTR such that a chroma signal after undergone converting processing to low frequency and PS processing is recorded, etc. except for 8 mm VTR. Further, this invention can be applied to various video signal recording/reproducing apparatuses such as disk recording/reproducing apparatus, etc. except for VTR. In addition, various modifications may be made within the scope which does not depart from the gist of this invention.

## Claims

1. A video signal recording apparatus adapted to convert a chroma signal included in a color video signal of the PAL system into a signal in a low frequency band and to record the low frequency band signal thus obtained, the apparatus comprising
sub-sampling means for implementing line offset sub-sampling of the chroma signal thereby to convert the chroma signal sub-sampled by the sub-sampling means to a signal in a low frequency band to be recorded on a recording medium along with a luminance signal.

2. A video signal recording apparatus according to claim 1, further comprising
means for changing the state where the V-axis of a chroma signal included in a color video signal of the PAL system is inverted every line to the state where the V-axis of the chroma signal is not inverted, and for converting the chroma signal to colour difference signals,
thereby to perform line offset sub-sampling of the color difference signals by using the sub-sampling means to provide a sub-sampled signal and to provide, from the non-inverted sub-sampled signal, a low frequency band chroma signal.

3. A video signal recording apparatus according to claim 2, wherein the recording medium comprises a video tape and further comprising means responsive to the low frequency chroma signal to record it onto the video tape along with a luminance signal.

4. A video signal recording/reproducing apparatus adapted to convert a chroma signal included in a color video signal of the PAL system to a signal in a low frequency band to be recorded and reproduced,
the apparatus comprising:
a recording system for performing line offset sub-sampling on the chroma signal to generate a signal to be recorded; and
a reproducing system for performing a re-sampling process and interpolation process on the reproduced signal.

5. A video signal recording/reproducing apparatus according to claim 4, wherein the recording system comprises:
means for changing the state where the V-axis of the chroma signal included in the color video signal of the PAL system is inverted every line to the state where the V-axis of the chroma signal is not inverted, and for converting the chroma signal to colour difference signals;
means for performing line offset sub-sampling on the color difference signals to provide a sub-sampled signal; and
means for converting the sub-sampled signal to a signal in which the V-axis is inverted every line, thereby to provide a low frequency band chroma signal, and wherein
the reproducing system comprises:
means for converting the low frequency band chroma signal to colour difference signals, and for converting the signal in which the V-axis is inverted every line to a signal in which the V-axis is not inverted;
means for implementing re-sampling to the color difference signals to interpolate them to provide an interpolated signal; and
means for converting the interpolated signal to a signal in which the V-axis is inverted every line to provide a chroma signal of the PAL system.

6. A video signal recording/reproducing apparatus according to claim 4 or 5, wherein, in the reproducing system, a 2H comb filter is used to eliminate crosstalk of a chroma signal.

7. A video signal recording/reproducing apparatus according to claim 4, 5 or 6, wherein a line interpolating circuit is used for interpolation in the reproducing system, thereby to carry out interpolating processing while removing crosstalk.

8. A video signal recording/reproducing apparatus as set forth in claim 7,
wherein the recording medium comprises a video tape, and
wherein, in the recording system, a chroma signal is converted to a chroma signal in a low frequency band and phase shift processing is performed thereon, to generate a signal to be recorded onto the video tape along with a luminance signal.
